Europäisches Patentamt

European Patent Office

Office européen des brevets

(11) Publication number: 0 220 140
A2

# (12) EUROPEAN PATENT APPLICATION

(21) Application number: 86830285.2

(22) Date of filing: 06.10.86

(51) Int. Cl.⁴: H 01 G 1/02

(30) Priority: 25.10.85 IT 358285

(43) Date of publication of application:
29.04.87 Bulletin 87/18

(84) Designated Contracting States:
DE ES FR GB GR

(71) Applicant: GEOFARAD S.r.l.
Via Selice, 12/A
I-40027 Mordano (Bologna)(IT)

(72) Inventor: Magnani, Alessandro Gaetano
Via della Grada, 13
I-40122 Bologna(IT)

(74) Representative: Lanzoni, Luciano
c/o BUGNION S.p.A. Via Farini, 37
I-40124 Bologna(IT)

(54) A method of attaching electrical cable to a capacitor for wiring purposes, and a capacitor obtained by such a method.

(57) According to a method disclosed, automatic means can be adopted to attach wiring lead cable (4) to a capacitor with resin-embedded electrodes; a fluid-tight seal is ensured by embodiment of the cap (1) with a projecting collar (3) the bore of which freely accomodates the external diameter of the cable, and by ensheathing both the collar (3) and an adjoining stretch of the cable (4) with a tubular seal (5) fashioned in heat-shrink material which, once in position, is warmed in order to induce contraction.

EP 0 220 140 A2

## A method of attaching electrical cable to a capacitor for wiring purposes, and a capacitor obtained by such a method.

The invention described herein relates to a method of attaching wiring lead cable to a capacitor, in particular of the type with electrodes embedded in a synthetic resin.

The prior art embraces a design of capacitor the casing of which houses electrodes embedded in a synthetic resin, generally epoxy.

Such a capacitor will be connected to the unit it serves by way of patent terminals (e.g. "faston"), or by way of leads, i.e. a length of cable attached to and extending from the capacitor itself. In the latter instance, difficulties are encountered in achieving automated manufacture of the capacitor, especially where physical attachment of the cable is concerned, and in ensuring a tight seal.

In a first method of attaching the leads, the cap of the capacitor is provided with a hole in which to locate a grommet of internal diameter smaller than the external diameter of the electrical cable utilized. The cable is forced through the grommet, whereupon assembly of the capacitor can be completed.

This technique is effective enough as far as regards ensuring an efficient seal, but is costly, inasmuch as the forcing of electrical cable through grommets is an operation that can only be performed by hand. A second method, which affords greater economy, is that of embedding the leads directly in the resin; in this instance it becomes possible to turn out capacitors using a fully-automated process.

There are negative aspects to such a technique, however, regarding the provision of an efficient seal; in practice, difficulties arise in achieving a firm bond between the epoxy bedding resin and the cable, which is generally sheathed in PVC.

Accordingly, the object of the invention is that of overcoming the drawbacks mentioned above.

In adopting a method as characterized in the claims appended, one resolves the question of how capacitors may be manufactured economically utilizing automated machinery, and provided with a fully efficient seal; in the method according to the invention, the cap of the capacitor is embodied with a projecting collar designed to accommodate the cable in a loose fit, and rendered fluid-tight by a seal fitted over the collar and ensheathing an adjoining stretch of the cable.

Such a method provides significant advantages from the economy standpoint, inasmuch as the bore of the projecting collar is made wider than the diameter of the cable, and automatic machinery can thus be used to insert the one through the other.

What is more, the type of seal adopted, which may be embodied in flexible material, ensures an optimum fit in terms of impeding both the ingress of water and, where appropriate, the egress of resin.

The method can be adopted to yet greater advantage where the seal is embodied in heat-shrink material; with the seal in position, application of heat will produce its faultless adhesion both to the collar and to the adjoining stretch of cable, thereby ensuring a fully fluid-tight fit.

The cap of a capacitor according to the invention thus exhibits a projecting collar accommodating the emerging leads, and a seal ensheathing the collar.

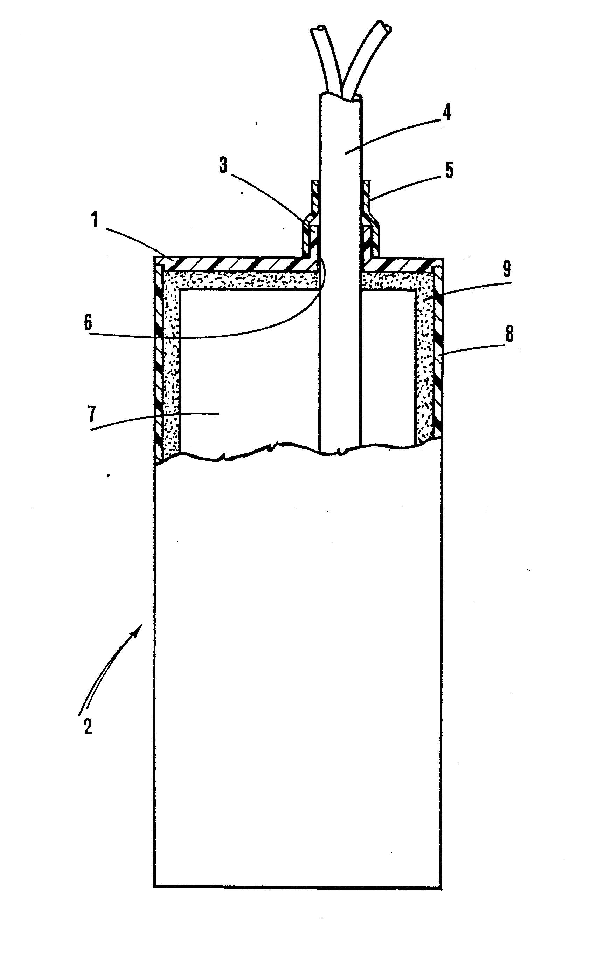

The invention will now be described in detail with reference to the accompanying drawing, which is the longitudinal section through a capacitor obtained by implementation of the method disclosed.

In the drawing, 2 denotes a capacitor, consisting of an electrode assembly 7, conventional in embodiment, housed in a casing 8 enclosed by a cap 1.

Internally of the casing 8, the electrodes 7 are embedded in a synthetic resin 9, usually epoxy, which all but totally envelops the assembly; 4 denotes a length of electrical cable the cores of which provide leads that are attached to the electrodes.

The cap 1 of a capacitor according to the invention exhibits a projecting collar 3 the bore 6 of which is wider than the external diameter of the cable 4.

During assembly of the capacitor 2, the cable 4 is slipped through the collar 3 and connected up to the electrodes 7 such that the collar and the electrodes are located at opposite sides of the cap 1.

With assembly of the capacitor 2 complete, a tubular seal 5 is passed over the end of the cable and slid along to the point of ensheathing both the collar 3 and an adjoining stretch of the cable 4.

The seal 5 may be embodied in a flexible material, with an internal diameter smaller than the external diameter of the cable 4, in which case its fitment over cable 4 and collar 3 involves simply stretching the material, and then releasing it once the leading end is located against the cap 1.

In a preferred embodiment, the tubular seal 5 will be embodied in heat-shrink material, in which case to ensure an efficient fluid-tight fit at the point where the cable 4 passes through the collar 3, no more is required than to apply heat to the seal 5, which will contract and draw into tight contact with the collar 3 and the adjoining stretch of cable 4. A blast of hot air may suffice in providing the heat necessary to shrink the seal 5; alternatively, the capacitor could be subjected briefly to heat from an oven held at the appropriate temperature. Needless to say, the heat-shrink material utilized will be of a type guaranteed to hold its shape and dimensions following initial exposure to the heat source.

Claims

1) A method of attaching electrical cable to a capacitor for wiring purposes, characterized in that it comprises the steps of:

−embodying a cap (1) that exhibits a projecting collar (3) the bore (6) of which is equal to if not larger than the external diameter of the cable (4) adopted;

−inserting one end of the cable (4) through the bore (6) of the collar (3) and connecting the relative ends of the leads to the electrode assembly (7), in such a way that collar and electrodes are positioned at opposite sides of the cap (1);

−locating the electrode assembly (7) inside a casing (8) matched to the cap and offering the cap to the casing, thereby creating an enclosure;

−surrounding the emerging cable with a tubular seal (5) the length of which is such as to ensheath both the projecting collar (3) of the cap (1) and an adjoining stretch of the cable (4).

2) Method as in claim 1, wherein the tubular seal (5) is embodied in a heat-shrink material and, once in position over the projecting collar (3) of the cap and the adjoining stretch of cable (4), subjected to application of heat such as causes its contracting into a tight fit with the parts it ensheaths, and wherein the heat-shrink material employed in embodiment of the tubular seal (5) is guaranteed to hold its shape and dimensions following such an application of heat.

3) Method as in claim 1, wherein the tubular seal (5) is embodied in flexible material, exhibits an internal diameter smaller than the external diameter of the cable (4), and is stretched prior to being fitted over the cable and the projecting collar of the cap (1).

4) A capacitor produced by implementation of the method of claim 1, characterized in that it comprises:
-a cap (1), exhibiting a projecting collar (3) which is directed away from the capacitor casing (8) and affords passage to a length of electrical cable (4) issuing from the casing;
-a seal (5) ensheathing both the projecting collar (3) and the cable (4), at least at the point where the cable emerges from the collar.

5) Capacitor as in claim 4, wherein the seal (5) is embodied in tubular heat-shrink material.

6) Capacitor as in claim 4, wherein the seal (5) is embodied in a flexible tubular material.

0220140